# EUROPEAN PATENT APPLICATION

(11) **EP 0 833 495 A2**
(43) Date of publication of application: **01.04.1998**
(21) Application number: 97115842.3
(22) Date of filing: 11.09.1997
(51) Int. Cl.: H04N 1/32

(54) **Message processing system, image forming apparatus, message processing method and image forming method**

(30) Priority: 30.09.1996 JP 278885/96
(71) Applicant: KABUSHIKI KAISHA TOSHIBA, Kawasaki-shi, Kanagawa-ken 210 (JP)
(72) Inventor: Oikawa, Masami, 1-1 Shibaura 1-chome Minato-ku Tokyo 105 (JP)
(74) Representative: Blumbach, Kramer & Partner GbR

(57) **Abstract**

An image forming apparatus comprises a function of outputting a to-be-processed message, a first storage function (S1) of receiving the message and storing the message in the first storage region (160a), the first processing function (S3, S5, S9) of, when the message stored in the first storage region has first priority, executing processing in accordance with the message, a second storage function (S5, S7) of, when the message stored in the first storage region has second priority lower than the first priority, moving the message to the second storage region (160b) and storing the message in the storage region, and a second processing function (S11, S13, S15) of, when the message is not stored in the first storage region, executing processing in accordance with the message stored in the second storage region.

## Description

The present invention relates to an image forming apparatus and a message processing system such as a digital copying machine executing message communication including the execution of a copying function, a scanning function, a print function, a facsimile transmission/reception function, an image processing function, a communications function connected to an external apparatus and communicating information, and to an image forming method and a message processing method.

Conventionally, in an image forming apparatus, such as a digital copying machine, which has an image read function (scanner) and an image print function (printer), the image read function and the image print function can operate at timing independent of each other.

Such a digital copying machine has as one of information transfer methods between processing blocks (such as a task and a CPU) capable of independently operating, a message communication method. The method is intended to use transfer target information as a message parameter and to transmit the parameter with addition data, such as a code and a size which indicates a type, a processing method and the like of the message.

Messages are usually inputted into a message cue of a reception-side block. The reception block analyzes contents of the messages in the input order and executes necessary processing.

In this case, such procedures as to receive one message, to process it and then to receive the next message are usually taken.

If messages received at one processing block are sent from a plurality of transmitting parties, the reception timing or frequency tend to be irregular. No messages are sent from anywhere for a while at one timing. Plural messages are simultaneously sent at the other timing.

If a plurality of messages are simultaneously received and the above-described procedures are carried out, then the processing of the message which reaches earlier is instantly started and the processing of the later messages has be to wait until the processing of the earlier message is finished.

If there is an urgent message, that is, there is a limit to waiting time on a later message, the timing of processing the urgent message might be missed depending on the processing time for the prior message. This might cause a serious trouble.

Suppose, for example, that it is necessary to set hardware (a register) for adjusting image positions and the like. Since the hardware cannot be set while an image is being outputted, this processing has to be conducted within a short period of time from the completion of prior printing before the start of next printing in continuous print operation. Due to this, the timing of completing the prior printing is supposed to be announced by a message. If the scanner is operating irrespectively of the printer, a scanner message might possibly occur at the same timing as that of the print message.

If the message for announcing the completion of printing is sent later than a scanner-side message requiring the longest time processing by only a moment, the scanner message is processed earlier than the print message. As a result, it is feared that the next print starts prior to the setting of the register.

As can be seen from the above, messages required to be processed in a short period of time exist both in the scanner system and the printer system. It is therefore necessary to take appropriate measures to deal with a case where messages overlap each other.

As described above, if a less urgent message and an urgent message come almost simultaneously, the message sent earlier is processed. Therefore, the urgent message tends to be delayed, thereby disadvantageously causing an obstacle to timing processing.

It is an object of the present invention to provide an image forming apparatus and an image forming method capable of removing processing timing failures due to the accumulation of a plurality of messages by processing messages generated in the apparatus in accordance with priority.

The present invention produces an image forming apparatus, which forms an image by a plurality of operations including a scanning operation for scanning a document image, an image processing operation for processing the scanned document image, and a printing operation for printing the processed document image on a sheet, comprising: means for outputting a message designating a predetermined processing in relation to the plurality of operations; first storage means for receiving and storing the message in a first storage region; first processing means for executing the predetermined processing in accordance with the message when the message stored in the first storage region has first priority; second storage means for moving the message stored in the first storage region, when the message has second priority lower than the first priority, to a second storage region and storing the message in the second storage region; and second processing means for executing the predetermined processing in accordance with the message stored in the second storage region when no message is stored in the first storage region.

The present invention having this structure processes various messages generated in the image forming apparatus in accordance with their respective priority. Namely, a message (such as a test print) referring to a register in a ready state and requiring relatively long time is given low priority since it is feared that the timing of other urgent messages is adversely affected by the above message. The message is temporarily stored in a memory and executed later in an appropriately manner. A message (such as sheet size change) requiring strict timing in the image forming is given higher priority and executed sooner. By giving priority in accordance with the content of the message, storing the message in a memory or executing the message instantly in accordance with the respective priority, it is possible to prevent the operation timing for processing an important message from malfunctioning and to proceed with the overall processing of the image forming apparatus smoothly. In addition, the method according to the present invention can process messages in accordance with the content of the messages provided by the same principle and by using a memory at appropriate time. The method therefore can realize smooth image forming as a whole.

This invention can be more fully understood from the following detailed description when taken in conjunction with the accompanying drawings, in which:
FIG. 1 is a cross-sectional view of the digital copying machine according to an image forming apparatus of the present invention.
FIG. 2 shows the system structure of the image forming apparatus.
FIG. 3 is a block diagram showing the structure of the scanner section.
FIG. 4 is a block diagram showing the structure of the basic section CPU.
FIG. 5 is a block diagram showing the structure of the printer section.
FIG. 6 is a block diagram showing the structure of the facsimile section.
FIG. 7 shows the structure of the operation panel.
FIG. 8 shows the structure of functions of the digital copying machine.
FIG. 9 shows the correlation of messages.
FIG. 10 shows the concept of the processing of messages.
FIG. 11 shows the format of messages.
FIG. 12 shows examples of message codes of priority L to be stored in the storage table.
FIG. 13 shows examples of message codes of priority H to be instantly message-processed.
FIG. 14 shows examples of message codes of priority H to be instantly message-processed.
FIGS. 15A through 15C show examples of messages.
FIG. 16 is a flowchart for describing message processing operation.

One embodiment according to the present invention will now be described with reference to the drawings.

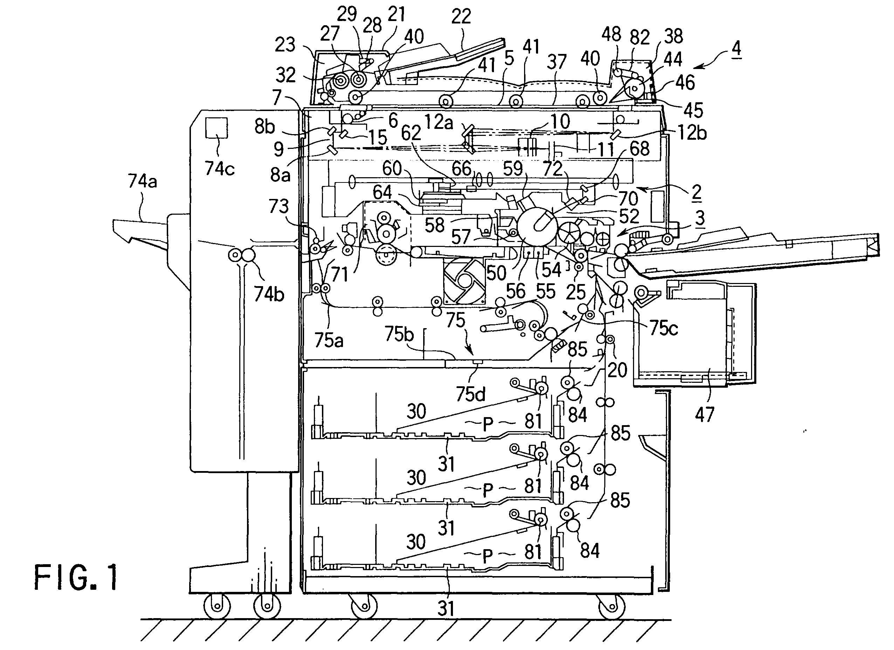

FIG. 1 is a schematic diagram showing the overall structure of a digital copying machine as an image forming apparatus according to the present invention. The digital copying machine 1 comprises a scanner device 2 serving as an image read function and a printer device 3 serving as an image print function. An automatic document feeder (ADF) 4 is also provided above the copying machine 1.

In the ADF 4, the rear end edge portion of a box-type cover main body 21 is provided on the rear end edge portion of the upper surface of the copying machine 1 through a hinge (not shown) to be opened and closed freely. Thus, the ADF 4 is rotated and shifted if necessary so that the upper portion of a document base 5 can open. A document feed base 22 capable of holding plural documents altogether is provided on the right side portion on the upper surface of the cover main body 21. A feed function 23 for picking up and feeding documents to one end portion (left end portion in FIG. 1) of the document stage 5 one by one. The feed function 23 comprises a pickup roller 27 for picking up a document, a weight plate 28 pressing the document against the pickup roller 27, an empty sensor 29 as a document detection sensor for detecting a state of the setting of a document on the document feed stage 22 and the like. A sheet feed roller 32 is arranged in the direction where the pickup roller 27 picks up a document so as to ensure feeding documents one by one. A document carrier belt 37 covers the upper surface of the document stage 5. The document carrier belt 37 is an endless belt having a white, wide outer surface bridging a pair of belt rollers 40, 40 and moving in forward and backward directions by means of a belt drive mechanism (not shown). A plurality of belt presser rollers 41 for pressing the belt surface on the document base 5 and a set switch (not shown) for detecting the open/close state of the ADF 4 are provided on the back surface of the inside periphery of the document carrier belt 37. The document fed by the feed function 23 is carried from one end portion (left end portion) to the other end portion (right end portion) of the document base 5. A sheet discharge function 38 is provided on the right portion of the ADF 4. The sheet discharge function 38 has a carrier roller 44, a pinch roller 45 for pressing a document against the carrier roller 44, a sheet discharge sensor 46 serving as a document detection function which detects the rear end of the document fed in the sheet discharge direction and the like. A sheet discharge roller 48 is provided on the lower part of a document discharge path. A gate 82 is provided on the document discharge path for introducing the document inside out to the document base 5 so as to make both sides of the document copied.

The scanner device 2 comprises an exposure lamp 6 as a light source, a first carriage 7 having a mirror 15, a second carriage 9 having mirrors 8a, 8b for bending an optical path, a lens 10, a CCD sensor 11 receiving reflection light, a drive system (not shown) for changing positions of the elements and an A/D converter (not shown) for converting the analog data of the output of the CCD sensor 11, that is, image data (information) into digital data. The first and second carriages 7, 9 are connected to each other by a timing belt (not shown) so that the second carriage 9 can move in the same direction as that of the first carriage 7 and at half a speed of that of the first carriage 7. By so doing, documents can be scanned at a constant optical path length to the lens 10. The lens 10 has a fixed focal length and moves in the optical axis direction when changing magnification. One pixel of a document corresponds to one device of the CCD sensor 11. An output of the CCD sensor 11 is outputted to the A/D converter. The first and second carriages 7, 9 and the mirrors 12a, 12b are moved by a stepping motor (not shown). The first and second carriages 7 and 9 are moved in accordance with the movement of the timing belt (not shown) bridging a drive pulley (not shown) and an idle pulley coupled to the rotation axis of the stepping motor. A spiral shaft (not shown) is rotated by the stepping motor (not shown) and the lens 10 is moved in the optical axis direction by the movement of the spiral shaft.

A laser diode 60, a collimator lens 62 related to the laser diode 60, a polygon mirror (multiple surface reflection mirror) 64, a lens 66, reflection mirrors 68, 70 and a lens 72 are also arranged so that laser beam can be incident on a sensitive drum 50 from an exposure device 52.

The printer device 3 uses, for example, a combination of a laser optical system and an electro-photographic system capable of forming an image on a transcription sheet. That is, the printer device 3 has a sensitive drum 50 as an image holder rotatably supported at almost the center of the printer device 3. The exposure device 52, a developing device 54, a transcription charger 55, a exfoliation charger 56, a PCC charger 57, a destaticizer lamp 58 and an electronic charger 55 are provided around the sensitive drum 50. The sensitive drum 50 is uniformly charged by the electronic charger 59. An image of the document is formed on the sensitive drum 50 by outputting laser beam from the scanner device 2 to thereby form an electrostatic latent image.

The electrostatic latent image formed on the sensitive drum 50 is developed by the developing device 54. The developed image is transcribed on a copying paper sheet P fed from a sheet feed cassette 30 serving as a sheet feed function to be described later through the sheet feed roller 20 and an aligning roller 25 by the transcription charger 55. The copying paper sheet P on which the developed image is transcribed by the transcription charger 55 is exfoliated by the exfoliation charger 56 by using AC corona discharge and carried to a fixing unit 71 through a carrier belt. The copying paper sheet P on which the developed image is molten-fixed by the fixing unit 71 is discharged to a unit 74 having a discharge tray 74 by the paired paper discharge roller 73. The unit 74 has a pair of rollers 74b for facing down the copying paper sheet P discharged from the paired paper discharge rollers 73, and a stapler 74c for stapling the paper sheet P on the upper portion of the unit 74 in a staple sort mode.

The developing agent remaining on the sensitive drum 50 after transcribing and exfoliating the developed image on the copying paper sheet P is cleaned by a PCC charger 57. The destaticizer charger 58 sets a potential on the sensitive drum 50 at a level not more than a certain level to thereby allow the next copying operation to be conducted.

In case of double-side copying operation, that is, copying the both sides of the copying paper sheet P, the copying paper sheet P having a developed image molten-fixed thereon by the above-described fixing unit 71 is carried through the carrying path 75a and stored in a tray 75b. An image is transcribed on one side of the paper sheet P stored in the tray 75b. The paper sheet P is then carried to the transcription charger 55 through the carrying path 75c and a developed image is transcribed on the other side of the sheet P. A light reflection type paper sheet sensor 75d is provided on the lower part of the tray 75b for detecting the presence/absence of sheets stacked on the tray 75b.

The carrying path 75a, the tray 75b, the carrying path 75c and the sheet sensor 75d constitutes as a whole an automatic double-side device (ADD) 75 serving as an automatic double side reverse mechanism.

Reference numeral 30 denotes a sheet feed cassette serving as a sheet feed function. A plurality of sheet supply cassettes are provided vertically and removably from the front side of the digital copying machine 1. Each of the sheet feed cassettes 30 consists of a box-type cassette case 31 storing copying paper sheets P and a pickup end portion inclined in the direction of sheet pickup direction. An uppermost copying paper sheet P stored in the cassette case 31 of the sheet feed cassette 30 is always picked up first by the pickup roller 81. The copying paper sheets P sent to the upper inside of the pickup end portion of the cassette case 31 are separated one by one by a sheet separation unit consisting of a sheet feed roller 84 and a separation roller (or separation pad) 85, and carried to the printer device 3.

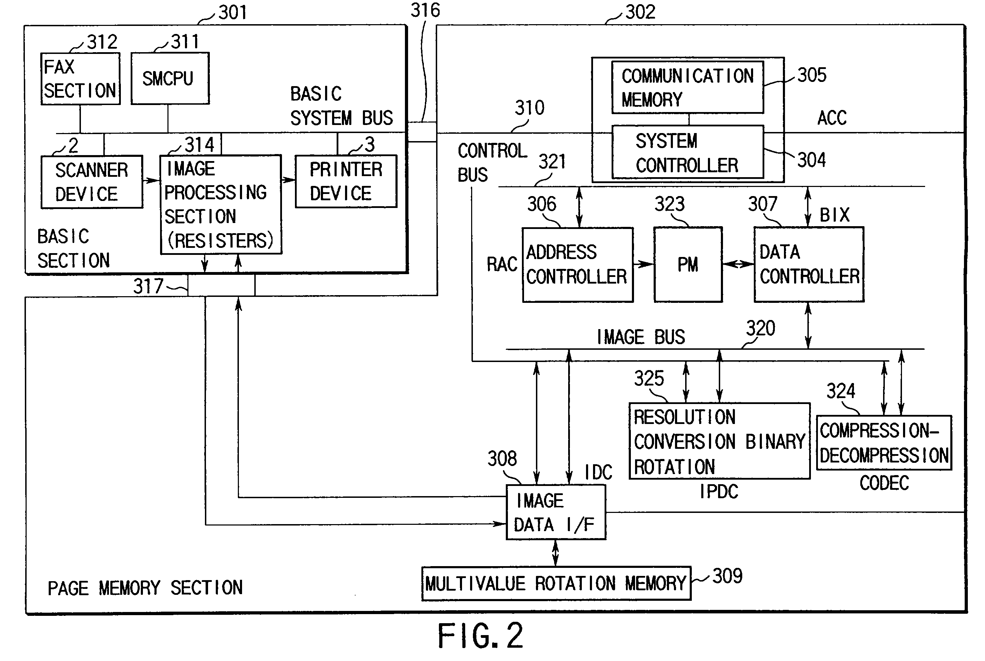

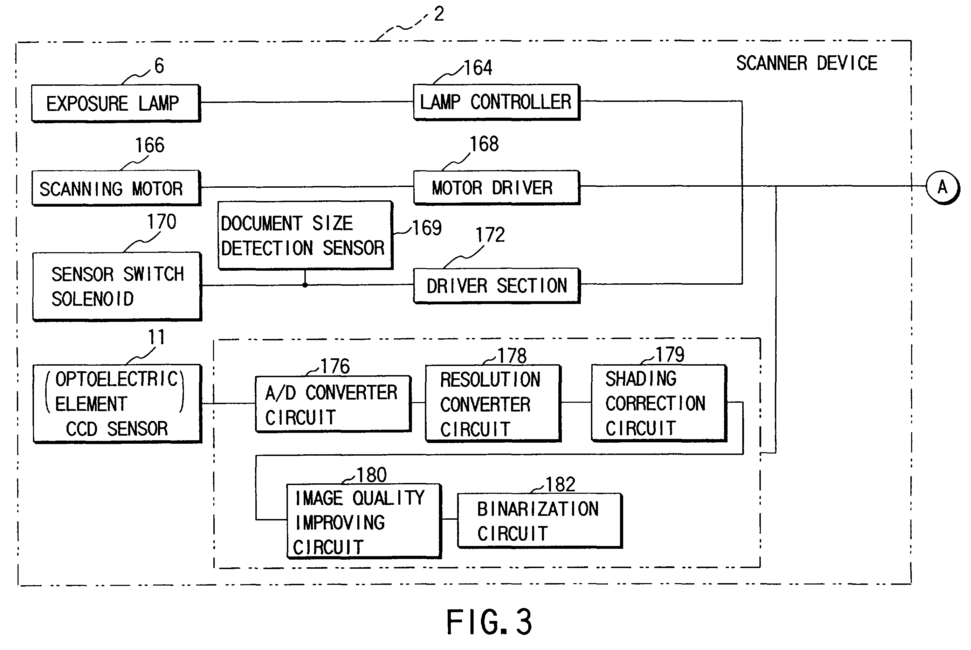

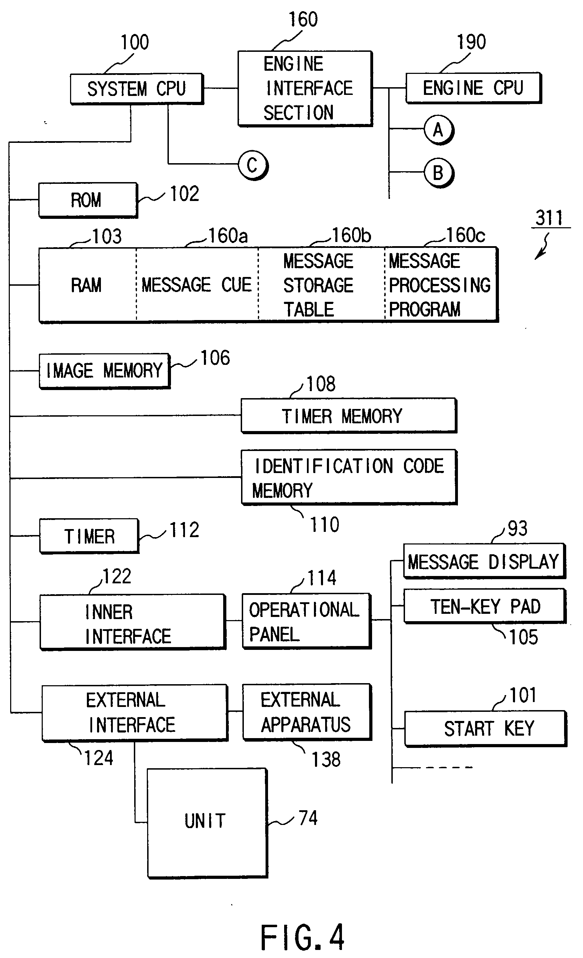

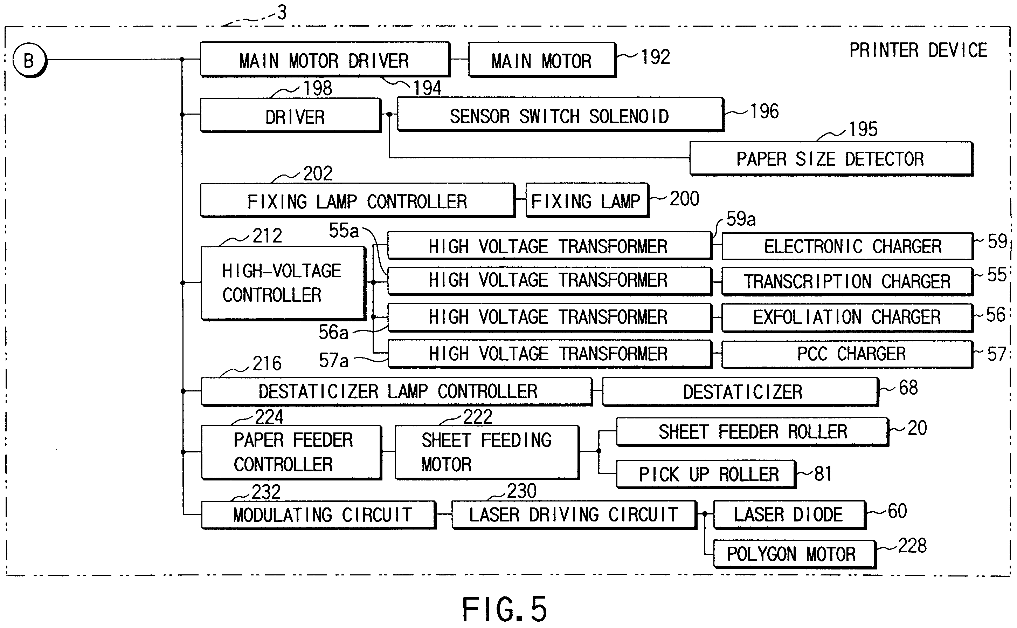

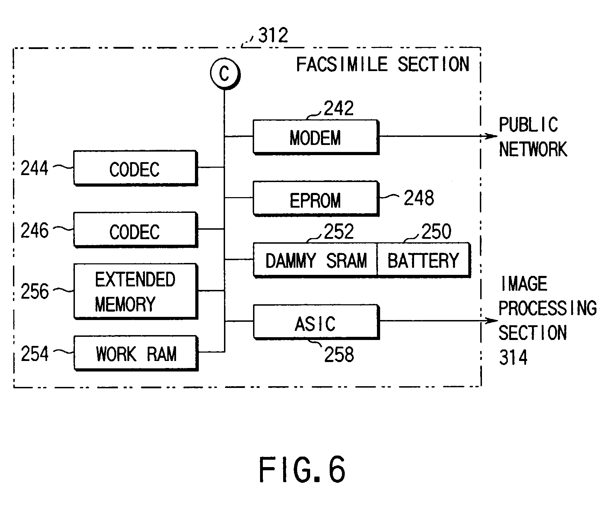

The control system of the digital copying machine 1 will be described with reference to FIGS. 2 through 6. FIG. 2 shows the overall structure of the control system of the digital copying machine 1. FIG. 3 shows the scanner device 2. FIG. 4 shows the control section (basic section CPU) 311. FIG. 5 shows the printer device 3. FIG. 6 shows a facsimile section 312.

The control system of the digital copying machine 1 is made of two blocks. An image processing section 314 is connected between the scanner device 2 and the printer device 3. The control system consists of a basic section 301 forming the digital copying machine 1 and having the facsimile (FAX) section 312 as a facsimile function, and a page memory section 302 serving as a memory function realizing memory copy by receiving and storing the image data from basic section 301 and by transferring the stored image data back to the basic section 301.

The basic section 301 and the memory section 302 are connected to each other by the basic section interface 316 for transmitting and receiving control data and a basic section image interface 317 for transmitting and receiving image data.

The basic section 301 consists of a scanner 313 as an input function, a printer 315 as an output function, an image processing function (image processing section) 314 having a plurality of image processing registers, the facsimile section 312 and the control section (basic section CPU) 311 for controlling these elements.

The image processing registers provided on the image processing section are as follows. (S) is a scanner function-related register, (P) is a printer function-related register.
Input size register (S, P)
Resolution register (S)
Density register (S)
Output size register (P)
Image path register (S, P)
Image edit register (S)
   (Image edit includes trimming, masking and black-and-white reversal processing.)

These registers store parameters on processing. The parameters are determined by inputting values from an operation panel by an operator or setting default values. Necessary parameters are referred to when respective image processing operations are conducted.

As shown in FIG. 4, a ROM 102, a RAM 104, an image memory 106, a timer memory 108, an identification code memory 110, a timer 112, an internal interface 122 and an external interface 124 are connected to the system CPU 100 of the control section (basic section CPU) 311. An operation panel 114 is connected to the internal interface 122. A message display 93, a ten key 105, a start key 101 and the like are provided on the operation panel 114. The external interface 124 is connected to the unit 74 and the external device 138.

An engine CPU 190 and a facsimile (FAX) section 312 are connected through the engine interface 160 to the system CPU 100. The engine CPU 190 controls the scanner device 2 and the printer device 3.

The detailed structure of the scanner device 2 will now be described with reference to FIG. 3. The engine CPU 190 is connected to and controls a lamp controller 164 for controlling the exposure lamp 6 of the scanner device 2, a motor driver 168 for controlling a scanning motor 166, a driver 172 for driving sensor, switch and solenoid 170 including a document size detection sensor 169. The engine CPU 190 is also connected to and controls an A/D converter circuit 176 for processing image information from the CCD sensor 11 as a photoelectric device , a resolution converter circuit 178, a shading correction circuit 179, an image quality improving circuit 180 and a binarization circuit 182.

The printer device 3 will be described in detail with reference to FIG. 5. A main motor driver 194 for driving a main motor 192 in the printer device 3, a driver 198 for driving sensor, switch and solenoid 196 including a sheet size detector 195, a fixing lamp controller 202 for controlling a fixing lamp 200 of the fixing section 71, a high-voltage controller 212 for controlling the electronic charger 59, the transcription charger 55, the exfoliation charger 56 and the PCC charger 57, a destaticizer lamp controller 216 for controlling the destaticizer lamp 68, a sheet feeder controller 224 for controlling a feeder roller motor 222 for the sheet feeder roller 20 and the pickup roller 81, a modulating circuit 232 for controlling a laser driving circuit 230 for the laser diode 60 and the polygon motor 228. The engine CPU 190 controls all of the elements connected thereto. High voltage transformers 59a, 55a, 56a, 57a are provided between the high voltage controller 212 and the electronic charger 59, the transcription charger 55, the exfoliation charger 56, the PCC charger 57, respectively.

The page memory section 302 will be described with reference to FIG. 2. The page memory section 302 consists of a system controller 304 for controlling access of the basic section 301 to a page memory 323 and including a communication memory 305, a storage function (page memory or PM) 323 for temporarily storing image data, an address controller 306 for generating an address of the page memory 323, an image bus 306 for transferring data between devices in the page memory section 302, a control bus 321 for transferring a control signal between the devices of the page memory section 302 and the system controller 304, a data controller 307 for controlling data transfer between the page memory 323 and the remaining devices through the image bus 320, an image data I/F function 308 for interfacing image data when transferring image data to/from the basic section 301 through the basic section image data interface 317, a resolution conversion/binary rotation function 325 for converting the resolution of image data into that of the other device when transmitting the image data to the other unit, converting the resolution of image data received from the other device having a different resolution into the resolution of the printer device 3 of the basic section 301 and for rotating binary image data by 90°, compression-decompression function 324 for compressing inputted image data for a device transmitting and storing the compressed image data for use in, such as, facsimile transmission and optical disc storage, and for decompressing the compressed image data for providing visible printing, and a multivalue rotation memory 309 connected to the image data I/F function 308 and for rotating image data by 90° or -90° and outputting the rotated image data from the printer device 3.

Next, the facsimile section 312 will be described with reference to FIG. 6. The facsimile section 312 consists of a modem 242 connected to public network and serving as a modulator/demodulator for analog network connection, CODECs 244, 246 serving as an encoder/decoder of binary image data, an EPROM 248 for use in communications control program, a dummy SRAM 252 backed up by a battery 252 and serving as an image data storing function, a work RAM 254 for use in image data processing, an extended memory 256 and an ASIC 258 serving as an interface when outputting facsimile reception data to the image processing section 314.

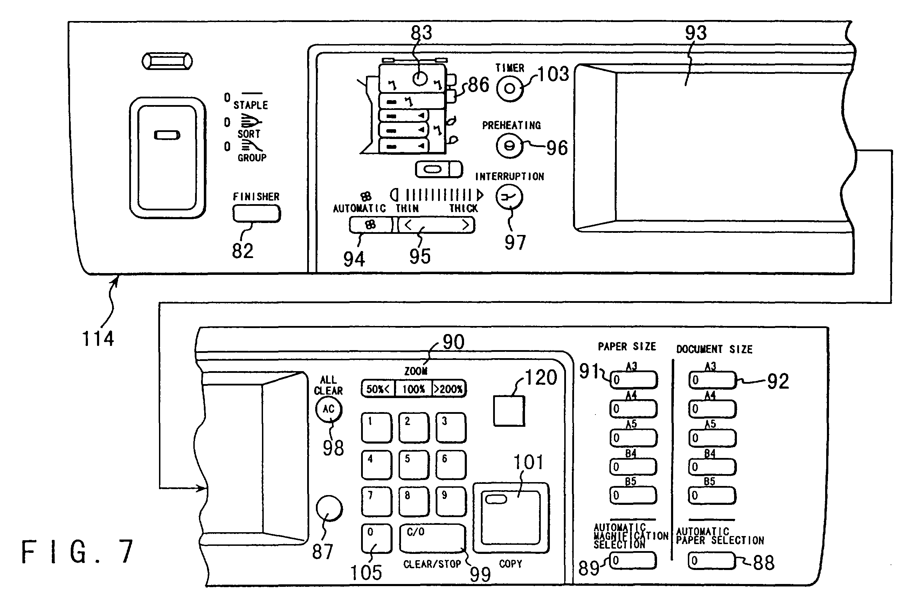

FIG. 7 shows the structure of the operation panel 114. Specifically, the operation panel 114 consists of a finisher key 82, a status display 83, a cassette selection key 86 for selecting sheet feed cassettes 30, a HELP key 87, an automatic sheet selector key 88, an automatic magnification selector key 89, a zoom/100% key 90, a document size key 91, a sheet size key 92, a message display 93, an all clear key 98, an automatic density key 94, a manual density key 95, a preheat key 96, an interruption key 97, an all clear key 98, a clear/stop key 99, a start key 101, a timer key 103, a ten key 105 and a communications start key 120.

The finisher key 82 is used for selecting a mode from among a sort mode, a group mode and a staple mode.

The display panel 83 flashes and displays various picture characters and indicates a status of the copying machine 1.

The cassette selector key 86 is used for selecting a cassette by depressing the key if the size of an earlier selected cassette does not have a desired size.

If the HELP key 87 is depressed as an operation guide key, a message indicating operation procedures is displayed. If depressing the HELP key 87 after setting a function, it is possible to confirm the setting content.

The automatic sheet selector key 88 is usually in an automatic sheet selection mode. By depressing the key 88, the size of a document placed on the document base (glass) 5 is automatically detected and a sheet having the same size as that of the document is automatically selected (only in case of a copy of an equal magnification).

If depressing the automatic magnification selector key 89, selecting an automatic magnification selection mode and designating a desired sheet size, then the size of a document placed on the document base (glass) 5 is detected and a copy magnification is automatically calculated.

As regards the zoom/100% key 90, if depressing a "25% <" key, the copy magnification is reduced to 25% on 1%-basis. If depressing a "> 800%" key, the copy magnification is increased to 800% on a 1%-basis. If depressing a "100%" key, the magnification is back to an equal magnification (100%).

The document size key 91 is used for setting a document size. If selecting and designating a document size, a copy magnification is automatically set.

The sheet size key 92 is used for selecting a sheet size.

The message display 93 displays characters and pictures indicating a status of the digital copying machine 1, operation procedures and various commands to the user. The message display 93 having a display function and including a touch panel can set a function.

As regards the automatic density key 94, if selecting an automatic density mode, the digital copying machine 1 automatically detects variable densities of the document and selects an optimum copy density.

The manual density key 95 is used for selecting a desired copy density. By depressing a "thin" key, the user can select five stages of thin densities. By depressing a "dark" key, the user can select five stages of dark densities.

As regards the preheat key 96, if depressing the key 96, the machine turns into a preheat (power saving) state and all display lamps are turned off. If copying a document again, the preheat key 96 is again depressed.

The interruption key 97 is used when interrupting continuous copying operation to copy a different document.

As regards the all clear key 98, if depressing the key 98, all selected modes are cleared to return to a standard state.

The clear/stop key 99 is used for correcting the copying number or stopping copying operation.

The star key 101 is depressed when starting copying operation.

As regards the timer 103, if depressing the timer 103, the information indicating what time the power of the digital copying machine 1 is turned on/off is displayed (supposing that a weekly timer is set).

The ten key 105 is used for setting the copying number. The number can be selected from 1 to 999.

The communication start key 120 is a key for indicating the start of transmission in facsimile communications.

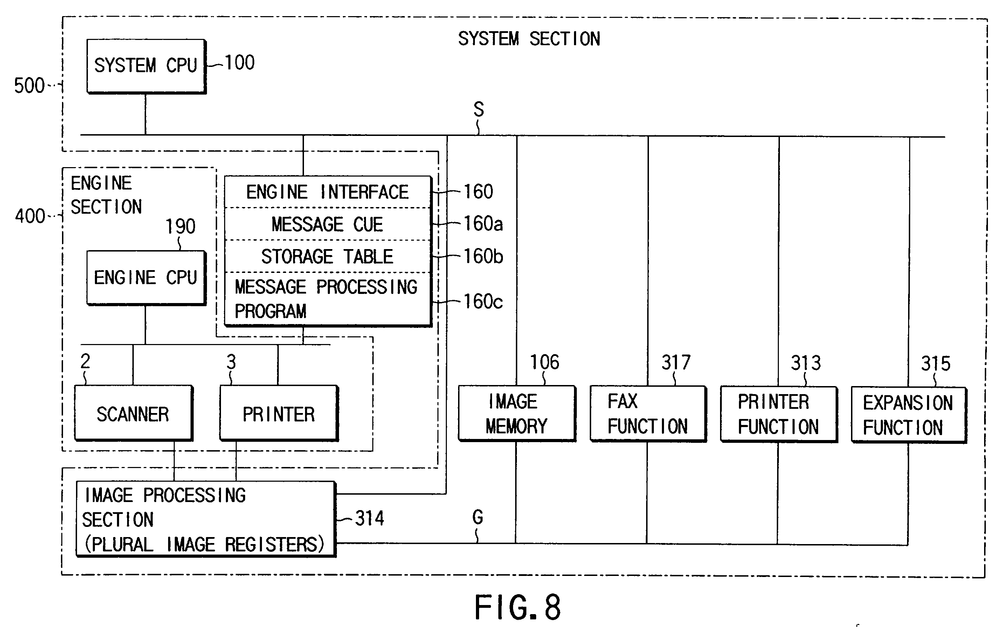

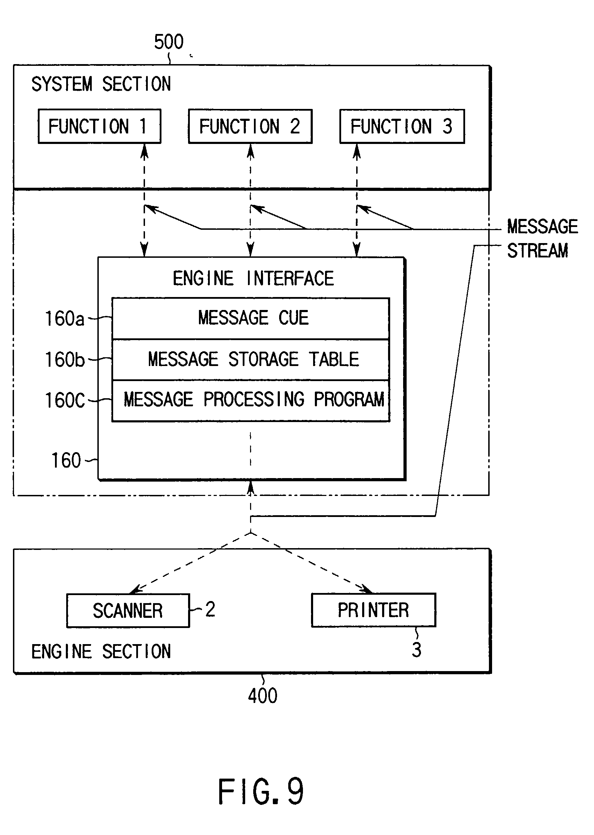

The detailed and specific structure of the message processing function, which is the very feature of the present invention, consists of a message processing program 160c specifying the operation of the present invention stored in the system CPU 100 and RAM 103 of FIG. 8, a message cue 160a serving as a message housing region and a message storage table 160b. However, in FIGS. 8 and 9, to better understand the feature of the present invention, the functions of the above-described digital copying machine 1 are illustrated as structural blocks and expressed in relation to the structural blocks.

FIG. 8 shows the structure of the functions of the digital copying machine 1. The digital copying machine 1 has an engine section 400 for controlling mechanisms of the scanner device (image read device) 2 and the printer device (image print device) 3, and a system section 500 realizing a function using the scanner device 2 and editing and the like an image read from the scanner device 2 or outputted to the printer device 3. The engine section 400 and the system section 500 are process-controlled by the engine CPU 190 and the system CPU 100 at particular timing, respectively.

The engine section 400 consists of the engine CPU 190, the scanner device 2 and the printer device 3.

The system section 500 consists of the system CPU 100, the image memory 106, the facsimile (FAX) function 317, the printer function 313, the extension function 315 and the image processing section 314 including operation registers.

The image memory 106, the facsimile (FAX) function 317, the printer function 313, the extension function 315 and the image processing section 314 are functionally connected.

The system CPU 100, the image memory 106, the facsimile (FAX) function 317, the printer function 313, the extension function 315, the engine interface function 160 are functionally connected.

The digital copying machine 1 of the present invention connects these two blocks using an interface. In this case, information about the status of the scanner device 2 and the printer device 3 and a command for actuating the scanner device 2 and the printer device 3 are inputted into the engine interface function 160, which is the contact point of the above-described two blocks, from the engine section 400 and the system section 500, respectively. The engine interface function 160 adjusts the operations of the engine section 400 and the system section 500 and controls timing while processing the information and command.

The digital copying machine 1 actuates the scanner device 2 and the printer device 3 integrally with each other when realizing a copying function. When realizing a facsimile (FAX) function 317 or a printer function 313, the digital copying machine 1 actuates the scanner device 2 and the printer device 3 independently of each other.

FIG. 9 shows the correlation of messages on the engine interface function 160. That is, the engine interface function 160 communicates information between the system section 500 and the engine section 400 by means of message communications.

The engine interface function 160 has a message cue 160a for receiving a transmitted message, a storage table 160b for storing a message and a message processing function (processing program) 160c for reading a message code by means of software and processing the message.

The engine interface function 160 receives a status notification of the scanner section 500 and that of the printer device 3 from the engine section 400. The engine interface function 160 also receives an operation command to the scanner device 2 and an operation command to the printer device 3 at different timing and with different numbers from the system section 500. A one-cycle processing length differs between the scanner device 2 and the printer device 3. As a result, messages are always sent from both devices at different timing and in different orders.

Suppose, for example, that the document read function of the scanner device 2 and the print function of the printer device 3 are executed at different timing.

Commands "feed document", "start read" as a scanning function are sent from the system section 500. If a plurality of documents are continuously read, these kinds of commands may be sent continuously.

In response to the commands, notifications such as "start of the operation of the automatic document feeder (ADF) 4", "start of the operation of the scanner device 2", "document size", "permission of next processing", "end of the operation of the automatic document feeder (ADF) 4" and "end of the operation of the scanner device 2" are sent from the engine section 400. These notifications are supposed to be sent by the number of commands in accordance with the operation.

Meanwhile, if the operation of the printer function 313 is added to the above, "a sheet feed command" and "a print command" are sent from the system section 500, whereas timing notifications such as "end of feed", "permit of print start", "permission of next processing", "end of operation" or the like are sent from the engine section 400.

These pieces of information are all received at the engine interface function 160 as messages. If either the scanner function or the printer function is solely operated, messages are sent regularly as follows:

Operation command → Start operation → Permission of next processing → End of operation.

Processing loads and the like can be therefore grasped, thereby facilitating respective control operations.

On the other hand, if both of the functions simultaneously operate, respective messages are sent irregularly. As a result, there is a possibility that one operation command and the other next processing permission overlap each other, operation starts overlap each other and a plurality of messages are sent at the same timing.

The present invention establishes a method for dealing with a case where a plurality of different types of messages are received simultaneously and thereby avoids the above-described problems.

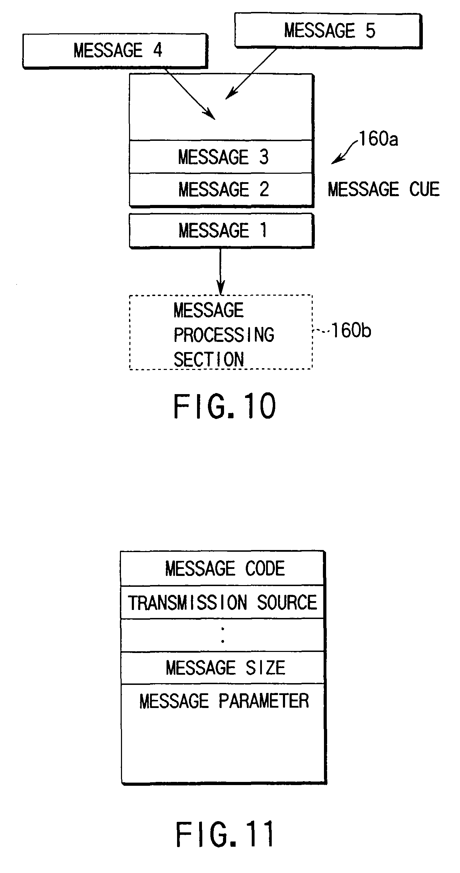

FIG. 10 shows the concept of dealing with messages (1 to 3) inputted into the message cue 160a of the engine interface function 160 and messages (4, 5) to be inputted thereinto later. As can be seen from the FIG. 10, the messages are appropriately processed by the message processing function 160c.

FIG. 11 shows the format of a to-be-sent message. The format consists of a message code (including processing priority), a transmitting party, a message size and a message parameter.

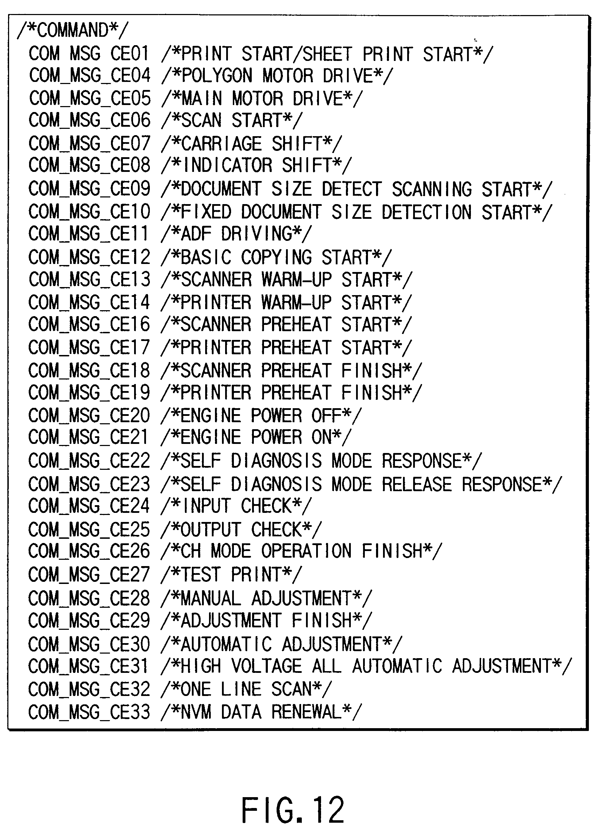

FIG. 12 shows examples of message codes having priority L (LOW) stored in the storage table 160b of the engine interface function 160. For example, "COM-MSG-CEO1" indicates "print start/white print start" and the message is stored in the storage table 160b.

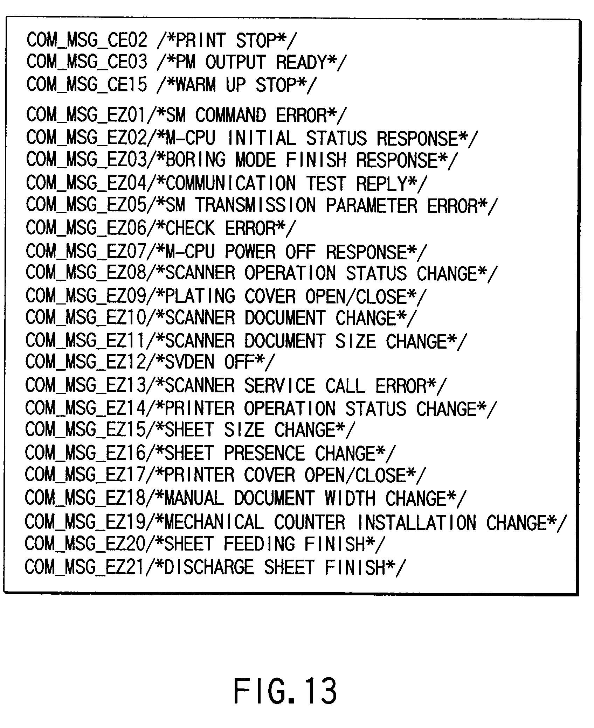

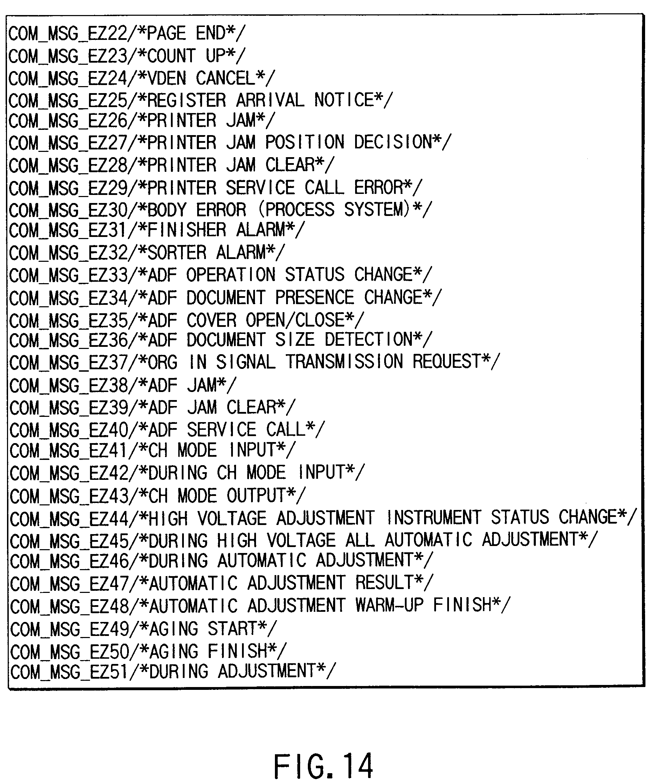

The messages shown in FIG. 12 are processed in a ready mode and the required timing is relatively flexible. That is, unlike commands to be processed during operation and required to be instantly processed so as to avoid operations from malfunctioning as described with reference to FIGS. 13 and 14, the messages in FIG. 12 do not have such a potential problem. As a result, they are given priority L. In addition, since most of the important lmessages in FIG. 12 need to refer to some of the image processing registers of the image processing section 314 shown in FIG. 2, relatively long time is required for processing these messages. For that reason, too, the messages of FIG. 12 are given priority L.

It is noted that those messages needed to refer to image processing registers among the messages shown in FIG. 12 are CE01, CE06, CE11 to CE12, CE20, CE21 and CE27 to CE31.

FIGS. 13 and 14 show examples of message codes having priority H (HIGH) indicating that message is required to be processed instantly. For example, "EZ01/*" indicates "SM command error */" and message processing is executed.

The messages shown in FIGS. 13 and 14 are processed while the image forming apparatus is being operating and they are associated with other operations. Therefore, if they are not promptly processed, other operations might be adversely influenced. Considering this, these messages are given priority H and processed instantly.

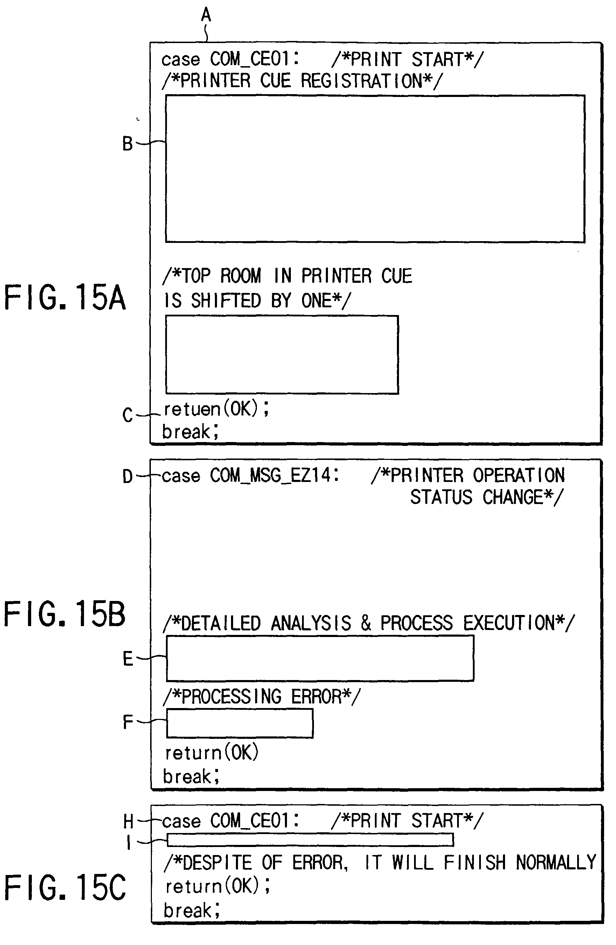

FIGS. 15A to 15C show examples of messages.

The message shown in FIG. 15A includes a print start message code "COM-CE01" (part A). From "CE" in the code, it is judged that the message has priority L and the print start message command is stored in the storage table. That is, necessary information (part B) is only written and registered in the storage table 160b and the processing is finished (part C).

The message shown in FIG. 15B includes a printer operation status change message code "COM-MSG-EZ14" (part D). From "EZ" in the code, it is judged that the message has priority H. That is, the printer operation status change message command is message-processed instantly (urgently). The message is instantly processed by using a function (part E) for executing specific processing, and processing is finished after the completion of the specific processing (part F).

The message shown in FIG. 15C includes a print start message code "COM-CE01" (part H) which has been stored in the storage table 160b. The processing of the message starts based on a function for executing specific processing (part I) after no other messages should be processed.

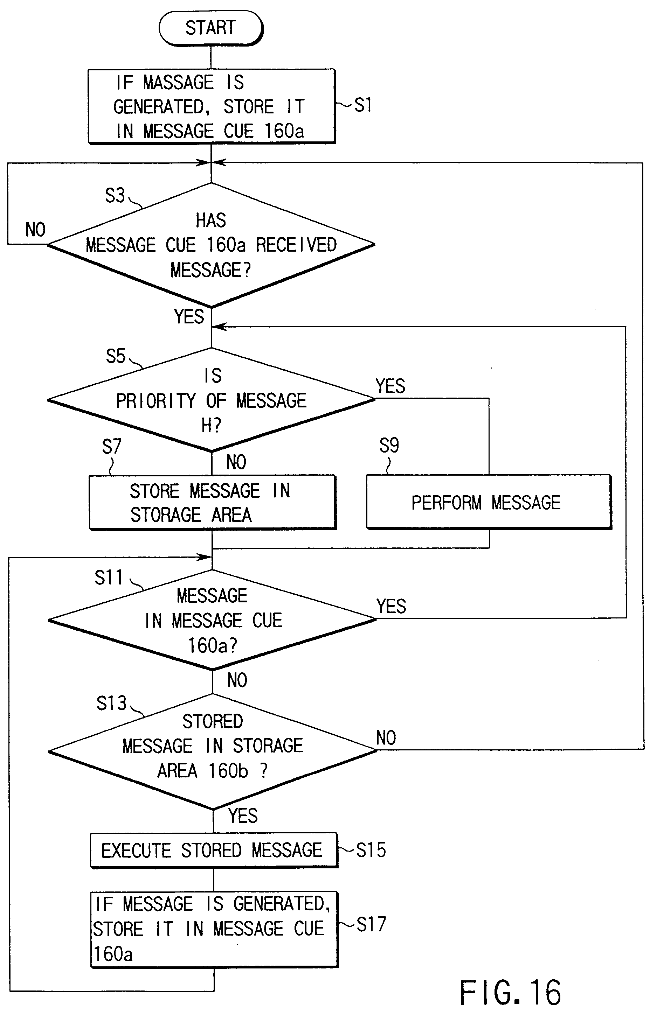

The message processing operation in these structures will be described with reference to the flowchart of FIG. 16.

In FIG. 16, by processing a normal operation program in accordance with a command given through the operator or the communication network, a to-be-processed message is generated at the control section 311 within the basic section 301 of the digital copying machine 1. Then, the message is housed in the message cue 160a in accordance with the message processing program 160c, which is the feature of the present invention, stored in the RAM 103 (S1). It is then confirmed that the message cue 160a has received a message (S3) and the message is analyzed. If the priority parameter of the message code is "EZ", it is judged that the message has priority H (HIGH), and if "CE", it is judged that the message has priority L (LOW) (S5).

If it is not necessary to process the message urgently (priority L), the message is not processed and stored in the storage table 160b (S7). If the message should be urgently processed (priority H), it is instantly executed (S9).

Thereafter, if there remain other messages in the message cue 160a, messages are sent from the beginning of the cue and the above processing steps (S5 to S9) are repeated as long as messages remain.

If there remains no message in the message cue 160a (S11) and messages are stored in the storage table 160b (S13), then the stored messages are sequentially processed in the storage order (S15).

If another message is generated after completing the message processing, the message is housed in the message cue 160a (S17). If no message exists in the message cue 160a (S11) in a message processing waiting state and some messages are stored in the storage table 160b (S13), the stored messages are processed (S8). The series of steps are repeated until no message exists in the storage table 160b.

If there is no message in the message cue 160a and there is no message stored in the storage table 160b, the machine 1 is in a waiting state until the next message is generated (S3).

As can be understood from the above description, according to the message processing method of the present invention, even if one operation command is received earlier than the other command, the former message is temporarily stored and the latter message can be executed earlier than the former message according to the priority. In addition, even if another message is being processed, message reception operation never fails to be conducted soon after the completion of the processing. Due to this, it is possible to avoid problems resulting from the accumulated messages in the message cue 160a.

Moreover, examples of adjustment-processing a plurality of messages within the image forming apparatus have been described so far. However, the present invention should not be limited to the inside of the image forming apparatus. It is possible to apply to a wider range, that is, a data processing apparatus system. To be more specific, when executing the adjusting function of the present invention, it is not always necessary to deal with image information and the target apparatus or system does not always have an image forming section. Therefore, it is possible to apply the plural message processing method of the present invention as part of the ordinary information processing system. Needless to say, in such a case, equivalent functions and advantages can be obtained. The adjustment mechanism in that case is applied to a plurality of commands within the system.

As described so far, according to the embodiments of the present invention, it is possible to avoid the delay of message processing by preventing message accumulation within the message cue. When a message having low priority (such as a message requiring long processing time) and a message having high priority are received almost simultaneously, the high priority message can be processed earlier than the low priority message.

Furthermore, if a message requiring short-time processing (priority H) and an operation command on a message which timing is not considered important (priority L) are sent simultaneously and the operation command (priority L) enters the message cue earlier than the former message (priority H), the message processing function receives the operation command (priority L) first. However, the message (priority H) can be actually processed earlier than the operation command (priority L).

Moreover, if a lot of messages enter the message cue and they exceed the capacity of the message cue, the cue may malfunction. However, according to the present invention, after one processing is executed, at least one message is always processed. Due to this, it is possible to avoid accumulating too many messages in the message cue.

Therefore, even if one message requiring short-time processing and the other message overlap, it is possible to prevent trouble from occurring.

As described so far in detail, the present invention can provide a message processing system, an image forming apparatus, a message processing method and an image forming method capable of preventing obstacles on timing processing caused by the delay of the message processing.

## Claims

1. An image forming apparatus, which forms an image by a plurality of operations including a scanning operation for scanning a document image, an image processing operation for processing the scanned document image, and a printing operation for printing the processed document image on a sheet, characterized by comprising:
means (100, 102, 104, S1) for outputting a message designating a predetermined processing in relation to the plurality of operations;
first storage means (100, 102, 104, 160a, 160c, S1) for receiving and storing the message in a first storage region (160a);
first processing means (100, 102, 104, 160c, 301, 302, S3, S5, S9) for executing the predetermined processing in accordance with the message when the message stored in the first storage region has first priority;
second storage means (100, 102, 104, 160b, 160c, S5, S7) for moving the message stored in the first storage region, when the message has second priority lower than the first priority, to a second storage region (160a) and storing the message in the second storage region (160a); and
second processing means (100, 102, 104, 160c, 301, 302, S11, S13, S15) for executing the predetermined processing in accordance with the message stored in the second storage region when no message is stored in the first storage region.

2. An image forming apparatus according to claim 1, characterized in that the outputting means includes:
means (314) for storing a register indicating a parameter on the image processing operation; and
means (100, 102, 104, S1) for setting that a second message (FIG. 12) to be processed while referring to a status of the register has the second priority.

3. An image forming apparatus according to claim 1, characterized in that the outputting means includes:
means (314) for storing a register having a parameter on the scanning operation; and
means (100, 102, 104, S1) for setting that a second message (FIG. 12) to be processed while referring to a status of the register has the second priority.

4. An image forming apparatus according to claim 1, characterized in that the outputting means includes:
means (314) for storing a register having a parameter on the printing operation; and
means (100, 102, 104, S1) for setting that a second message (FIG. 12) to be processed while referring to a status of the register has the second priority.

5. An image forming apparatus according to claim 1, characterized in that the outputting means includes means (100, 102, 104, S1) for setting that a second message (FIG. 12) executed in a ready state in which a power of the image forming apparatus is turned on and a preparation for forming an image is made, has the second priority.

6. An image forming apparatus according to claim 1, characterized in that the outputting means includes means (100, 102, 104, S1) for setting that a second message (FIG. 12) has the second priority, the second message is executed in a ready state in which a power of the image forming apparatus is turned on and a preparation for forming an image is made, the second message relates to at least one of the scanning operation and the printing operation.

7. An image forming apparatus according to claim 1, characterized in that the outputting means includes means (100, 102, 104, S1) for setting that a second message (FIGS. 13, 14) executed during the image processing operation and the printing operation, has the second priority.

8. An image forming apparatus according to claim 1, characterized in that the outputting means includes means (100, 102, 104, S1) for setting a second message (FIG. 13, 14) has the second priority, the second message is executed during at least one of the scanning operation and the printing operation.

9. An image forming apparatus according to claim 1, characterized in that the second processing means includes means (100, 102, 104, S11, S13, S15) for, when no message is present in the first storage region, processing messages in the second storage region in a storage order.

10. An image forming apparatus according to claim 1, characterized in that the second processing means includes means (100, 102, 104, S11, S13, S15) for repeating processing of the second processing means until there is no message stored in the second storage region.

11. An image forming method using the image forming apparatus, which forms an image by a plurality of operations including a scanning operation for scanning a document image, an image processing operation for processing the scanned document image, and a printing operation for printing the processed document image on a sheet, characterized by comprising:
an outputting step (S1)of outputting a message designating a predetermined processing in relation to the plurality of operations;
a first storage step (S1) of receiving and storing the message in a first storage region (160a);
a first processing step (S3, S5, S9) of, when the message stored in the first storage region has first priority, executing processing in accordance with the message;
a second storage step (S5, S7) of, when the message stored in the first storage region has second priority lower than the first priority, moving the message to a second storage region (160b) and storing the message in the second storage region (160b); and
a second processing step (S11, S13, S15) of, when the message is not stored in the first storage region, executing processing in accordance with the message stored in the second storage region.

12. An image forming method according to claim 11, characterized in that the outputting step includes:
a step (314) of storing a register indicating a parameter on the image processing operation; and
a step (FIG. 12, S1) of setting that a second message (FIG. 12) to be processed while referring to a status of the register, has the second priority.

13. An image forming method according to claim 11, characterized in that the outputting step includes:
a step (314) of storing a register having a parameter on the scanning operation; and
a step (FIG. 12, S1) of setting that a second message (FIG. 12) to be processed while referring to a status of the register has the second priority.

14. An image forming method according to claim 11, characterized in that the outputting step includes:
a step (314) of storing a register having a parameter on the printing operation; and
a step (FIG. 12, S1) of setting that a second message (FIG. 12) to be processed while referring to a status of the register has the second priority.

15. An image forming method according to claim 11, characterized in that the outputting step includes a step (FIG. 12, S1) of setting that a second message (FIG. 12) executed in a ready state in which a power of the image forming apparatus is turned on and a preparation for forming an image is made, has the second priority.

16. An image forming method according to claim 11, characterized in that the outputting step includes a step (FIG. 12, S1) of setting that a second message has the second priority, the second message (FIG. 12) is executed in a ready state in which a power of the image forming apparatus is turned on and a preparation for forming an image is made, the message relates to at least one of the scanning operation and the printing operation.

17. An image forming method according to claim 11, characterized in that the outputting step includes a step (FIGS. 13, 14, S1) of setting that a second message (FIGS. 13, 14) executed during the image processing operation and the printing operation, has the second priority.

18. An image forming method according to claim 11, characterized in that the outputting step (FIGS. 13, 14, S1) includes a step of setting a second message has the second priority, the second message (FIGS. 13, 14) is executed during at least one of the scanning operation and the printing operation.

19. An image forming method according to claim 11, characterized in that the second processing step includes a step (S11, S13, S15) of, when no message is present in the first storage region, processing messages in the second storage region in a storage order.

20. An image forming method according to claim 11, characterized in that the second processing step includes a step (S11, S13, S15) of repeating processing of the second processing means until there is no message stored in the second storage region.
